# EUROPEAN PATENT SPECIFICATION

(11) **EP 2 312 490 B1**
(45) Date of publication and mention of the grant of the patent: **20.04.2016**
(21) Application number: 10251709.1
(22) Date of filing: 30.09.2010
(51) Int. Cl.: G06K 7/00

(54) **A method of and apparatus for identifying associated objects**
Verfahren und Vorrichtung zur Identifizierung assoziierter Objekte
Procédé et appareil permettant d'identifier des objets associés

(30) Priority: 19.10.2009 GB 0918282
(43) Date of publication of application: 20.04.2011
(73) Proprietor: Thales Holdings UK Plc, Addlestone, Weybridge, Surrey KT15 2NX (GB)
(72) Inventor: Naylor, Michael, Reading Berkshire RG2 0SB (GB); Jordan, Gary, Reading Berkshire RG2 0SB (GB)
(74) Representative: Maury, Richard Philip

(56) References cited:
- WO-A1-2009/055839
- WO-A2-2008/030357

## Description

### Field of the Invention

The present invention relates to a method of and apparatus for identifying and providing an indication of associated objects

### Background of the Invention

There are a number of conventional techniques for identifying objects, for example, items within a cargo container and one such technique is to attach RFID tags to the items within the container. A device for reading the RFID tags may be located within the container. However, such conventional techniques of identification of objects using radio frequency identification are limited by the inability of RFID readers to read tags reliably and simultaneously, whilst not reading other tags that are further away. In the example of items within a cargo container, one difficulty is that tags from adjacent containers may be read spuriously, giving rise to data errors. Furthermore, when the container is moved, the tags from different containers other than the one of interest may be read so that the number of tags being read may change and may exceed the number of tags within the container thereby giving the wrong indication of the contents of the container under consideration.

Methods that can measure the distance between the RFID tags and the reader may reduce the data errors, but situations may occur where tags in adjacent containers are nearer to the reader than tags within the container under consideration thereby again giving an incorrect indication of the contents of the container.

Thus there is a need for an improved system and method for identifying objects that are associated, for example objects within a particular cargo container.

WO 2009/055839 A1 discloses a method for singulation of at least two moving RFID tag populations in an RFID application.

### Summary Of The Invention

The present invention enables physical objects that are connected in some way to be reliably associated with each other.

According to a first aspect of the present invention there is provided an apparatus in accordance with claim 1.

In a preferred embodiment, the motion sensor and the identification signal generator comprise a slave device, the slave device further comprising an associated receiver, the apparatus further comprising a master device for interrogating the slave device, the master device comprising the first receiver and a further transmitter arranged to transmit an interrogation signal to the slave device to trigger the slave device to identify itself to the master device.

Preferably, the identification signal generator is arranged to generate a first identification signal comprising the identity of device and a second identification signal comprising movement data of the object.

In a further preferred embodiment, the apparatus includes a plurality of slave devices, each slave device being associated with a respective object.

A slave control device may be included to inhibit one or more of said slave devices from responding to interrogation by the master device after the slave device has been identified and movement data associated with that slave device read.

Preferably, the apparatus further comprises means to inhibit one or more of said slave devices from responding to interrogation in the event that there is no change in movement data since the said slave device was last interrogated.

In a preferred embodiment, one or more of said slave devices comprises a unit attachable to an object, and the master device comprises a unit attachable to a further object.

The movement sensor may be a three-dimensional movement sensor and the identification signal may be an RF signal.

According to a second aspect of the present invention there is provided a method in accordance with claim 10.

Preferably, the motion sensor and the identification signal generator comprise a slave device, the slave device further comprising an associated receiver, the method further comprising interrogating the slave device using a master device and transmitting from the master device an interrogation signal to the slave device to trigger the slave device to identify itself to the master device.

In a preferred embodiment, the step of generating an identification signal comprises generating a first identification signal comprising the identity of device and generating a second identification signal comprising movement data of the object.

The method may include sensing the motion of a plurality of objects each having an associated slave device.

In a preferred embodiment, the method further comprises inhibiting one or more of said slave devices from responding to interrogation by the master device after the slave device has been identified and movement data associated with that slave device read.

Preferably, the method further comprises inhibiting one or more of said slave devices from responding to interrogation in the event that there is no change in movement data since the said slave device was last interrogated.

The method may also further comprise attaching said one or more of said slave devices as a unit to respective one or more objects, and attaching the master device as a unit to a further object.

### Brief Description Of The Drawings

The present invention will now be described by way of example and with reference to the accompanying drawings in which:
Figure 1 is a cross-sectional view through a cargo container within which a plurality of objects are located and to which are attached devices according to an embodiment of the present invention; and
Figure 2 is a graphical representation of a gantry crane lifting a container such as that of Figure 1 to which are attached devices according to an embodiment of the present invention.

### Detailed Description of Preferred Embodiments

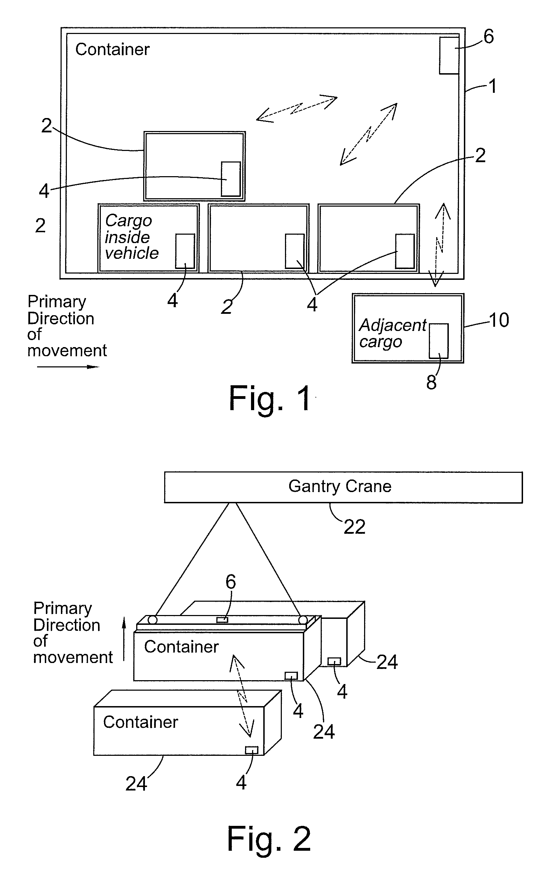

Figure 1 shows a container 1 within which a plurality of objects 2 are located. Each object 2 is fitted with a device 4 according to a preferred embodiment of the present invention that contains a movement sensor, a processor and a transmitter and receiver for communication with other objects. The device 4 is preferably an RFID device and the movement sensor is preferably a three-dimensional movement sensor. A further device 6 is located within the container 1, for example, attached to an inner surface of the container, and this further device 6 includes a processor and a transmitter and receiver for communication with other objects and may also include a three dimensional movement sensor. Figure 1 also shows an object 8 in a separate container 10 from that under consideration.

In operation, the device 6 attached to or associated with the container 1 may act as a master device with the devices 4 attached to the objects 2 within the container 1 and other containers 10 acting as slave devices. The master device 6 interrogates the slave devices which respond with a signal identifying the particular object to which it is attached. This interrogation may be conducted, for example, as explained in the present applicant's co-pending British patent application published as GB 2449232 A.

In a preferred embodiment, the interrogation procedure may be as follows. The master device 6 transmits an interrogation signal then switches to a receiving mode for a predetermined period during which time the slave devices 4 emit response transmissions consisting of a short identification code repeated after an interval, the interval being sufficiently long for each slave device 4 to transmit its identification code at least twice within the receiving period of the master device 6. It is possible that some codes may be misread by the master device 6 due to simultaneous transmission by the slave devices 4, however, the master device 6 will receive some codes clearly. At the end of its receiving period, the master device 6 interrogates each of the slave devices 4 whose code has been clearly identified to receive additional signature data from those slave devices providing an indication of the identity of the object to which that slave device is attached. After all of the identified slave devices 4 have been interrogated, the master device 6 transmits a further interrogation signal to request the slave devices 4 respond. Those slave devices 4 that have already been interrogated and whose signal has been registered with the master device 6 do not respond and of those that failed to register with the master device 6 previously, some will now register and be interrogated further. This process is repeated until no further replies are obtained from the slave devices 4 thereby indicating that all slave devices have been identified.

As mentioned above, each device 4 attached to an object 2 contains the movement sensor and each device 4, when moved with the object 2 to which it is attached, generates a signature signal including the additional signature data indicative of the movement that object 2 has experienced since it was previously interrogated. The signature signal is transmitted to the master device 6 when a slave device 4 is interrogated and the master device 6 compares the received signature signals. All signature signals containing the same movement data or similar movement data are deemed to be associated thereby indicating the objects 2 are associated, for example, within the same container 1.

During this process, it is possible that devices 8 in adjacent containers 10 may respond to the interrogation by the master device 6. However, devices showing a different movement signature will be considered not to be associated with the container 1 under consideration and their readings may be disregarded thereby providing a means of identifying associated objects with greater accuracy than conventional RFID means.

Whilst it is preferred that there is a master device 6 which receives and processes all of the signals received from the slave devices 4 attached to objects 2, in an alternative embodiment, each object's device 4 may be arranged to communicate the signature signal of its movement calculated over a short time period to neighbouring objects and the container 1 to enable them to compare the signature with their own signatures. A high degree of signature correlation indicates that the objects are associated, for example, in the same container.

The signature signal may vary from, for example, a series of samples of the data over a few seconds where, at a sampling rate of 500 Hz, three axis data would need 500x24x5 bits, that is, 60000 bits of data, to a more complex compressed movement/time data set. This data may easily be transmitted over a low power radio link between objects 2.

Thus, use of object association using movement sensing enables those devices 4 that are within the container 1 to be determined without ambiguity as they will all have highly correlated movements with each other and with the master device 6.

The above described technique may also be used to identify a container being lifted by a crane, as shown in Figure 2. In this embodiment, the master device 6 may be attached, for example, either to the gantry of the crane 22 or to a fixed position relative thereto and the slave devices 4 may be attached to or within the containers 24 to be lifted by the crane. The master device 6 interrogates the slave devices 4 as described above with regard to Figure 1. Furthermore, as a container 24 is moved by the crane, the movement sensor within the slave device 4 for that container generates a signature signal based on the movement detected by the movement sensor. This signature signal is then transmitted by the slave device 4 to the master device 6 when the slave device 4 is interrogated and the signature signal is processed by the master device 6 to enable the container associated with and being moved by the crane to be identified. This is advantageous over conventional RFID methods as it has been appreciated that it is not practical to read reliably a single container from a crane using conventional RFID methods as other containers will be within the range of the reader and will also respond. This occurs due to the highly variable nature of radio frequency propagation in a cargo container environment that contains multiple reflectors. The technique of correlating the movement signatures of the crane and the container assists in removing all responses by those containers that are not being lifted by a particular crane.

Thus the present invention provides a means of identifying associated objects with greater accuracy than conventional RFID techniques by comparing signature signals from various devices and those showing a different movement signature will be considered not to be associated.

Various modifications to the embodiments of the present invention described above may be made. For example, other components and method steps may be added or substituted for those above. In particular, in the embodiment shown in Figure 2, whilst it has been described that the master device is on the crane and the slave device is attached to the container, the slave device could instead be located on one or more objects within the container. Furthermore, in a preferred embodiment, the master device 6 may be triggered to interrogate the slave devices 4 by the movement of the devices rather than at predetermined intervals and the master device 6 may transmit a wake-up signal to the slave devices 4 to wake-up and transmit their signals.

## Claims

1. Apparatus for identifying and providing an indication of associated objects (2), the apparatus comprising:
a motion sensor for sensing movement of a first object (2);
an identification signal generator arranged to generate an identification signal for identifying a first object (2), the identification signal comprising data indicative of the identity of the first object (2) and data indicative of the movement of the first object (2) sensed by the motion sensor;
a transmitter arranged to transmit the identification signal;
a first receiver arranged to receive the transmitted identification signal; and
a processor arranged to process the transmitted identification signal received by the receiver to determine a correlation of the data indicative of the movement of the first object (2) as sensed by the motion sensor and transmitted in the identification signal with data indicative of movement of one or more further objects (2) and to generate an indication of associated objects (2) based on the correlation of the data indicative of the movement of the objects (2).

2. The apparatus according to claim 1, wherein the motion sensor and the identification signal generator comprise a slave device (4), the slave device (4) further comprising an associated receiver, the apparatus further comprising a master device (6) for interrogating the slave device (4), the master device (6) comprising the first receiver and a further transmitter arranged to transmit an interrogation signal to the slave device (4) to trigger the slave device (4) to identify itself to the master device (6).

3. The apparatus according to either of the preceding claims, wherein the identification signal generator is arranged to generate a first identification signal comprising the identity of device and a second identification signal comprising movement data of the object (2).

4. The apparatus according to either of claims 2 and 3, further comprising a plurality of slave devices (4), each slave device (4) being associated with a respective object (2).

5. The apparatus according to any one of claims 2 to 4, further comprising a slave control device to inhibit one or more of said slave devices (4) from responding to interrogation by the master device (6) after the slave device (4) has been identified and movement data associated with that slave device read.

6. The apparatus according to any one of claims 2 to 5, further comprising means to inhibit one or more of said slave devices (4) from responding to interrogation in the event that there is no change in movement data since the said slave device (4) was last interrogated.

7. The apparatus according to any one of claims 2 to 6, wherein one or more of said slave devices (4) comprises a unit attachable to an object (2), and the master device (6) comprises a unit attachable to a further object (2).

8. The apparatus according to any one of the preceding claims, wherein the movement sensor is a three-dimensional movement sensor.

9. The apparatus according to any one of the preceding claims, wherein the identification signal is an RF signal.

10. A method of identifying and providing an indication of associated objects (2), the method comprising:
sensing movement of a first object (2) using a motion sensor;
generating an identification signal for identifying the first object (2), the identification signal comprising data indicative of the identity of the first object (2) and data indicative of the movement of the first object (2) sensed by the motion sensor;
transmitting the identification signal to a receiver; and
processing the transmitted identification signal received by the receiver to determine a correlation of the data indicative of the movement of the first object (2) as sensed by the motion sensor and transmitted in the identification signal with data indicative of movement of one or more further objects (2) and to generate an indication of associated objects (2) based on the correlation of the data indicative of the movement of the objects (2).

11. The method of claim 10, wherein the motion sensor and the identification signal generator comprise a slave device (4), the slave device (4) further comprising an associated receiver, the method further comprising interrogating the slave device (4) using a master device (6) and transmitting from the master device (6) an interrogation signal to the slave device (4) to trigger the slave device (4) to identify itself to the master device (6).

12. The method of either of claims 10 and 11, wherein the step of generating an identification signal comprises generating a first identification signal comprising the identity of device and generating a second identification signal comprising movement data of the object (2).

13. The method of any one of claims 10 to 12, comprising sensing the motion of a plurality of objects (2) each having an associated slave device (4).

14. The method of any one of claims 11 to 13, further comprising inhibiting one or more of said slave devices (4) from responding to interrogation by the master device (6) after the slave device (4) has been identified and movement data associated with that slave device (4) read.

15. The method of any one of claims 11 to 14, further comprising inhibiting one or more of said slave devices (4) from responding to interrogation in the event that there is no change in movement data since the said slave device (4) was last interrogated.

16. The method of any one of claims 11 to 15, further comprising attaching said one or more of said slave devices (4) as a unit to respective one or more objects (2), and attaching the master device (6) as a unit to a further object (2).

17. The method of any one of claims 10 to 16, wherein the step of sensing the motion comprises sensing the motion using a three-dimensional movement sensor.

18. The method of any one of claims 10 to 17, wherein the step of generating an identification signal comprises generating an RF signal.

## Patentansprüche

1. Vorrichtung zur Identifizierung und Bereitstellung eines Hinweises auf assoziierte Objekte (2), wobei die Vorrichtung Folgendes umfasst:
einen Bewegungssensor zum Erkennen der Bewegung eines ersten Objekts (2);
einen Generator für ein Identifikationssignal, der dazu eingerichtet ist, ein Identifikationssignal zur Identifizierung eines ersten Objekts (2) zu erzeugen, wobei das Identifikationssignal Daten, die die Identität des ersten Objekts (2) anzeigen, und Daten, die die Bewegung des ersten vom Bewegungssensor erkannten Objekts (2) anzeigen, umfasst;
eine Sendevorrichtung, die dazu eingerichtet ist, das Identifikationssignal zu übertragen;
eine erste Empfangsvorrichtung, die dazu eingerichtet ist, das übertragene Identifikationssignal zu empfangen; und
einen Prozessor, der dazu eingerichtet ist, das übertragene und von der Empfangsvorrichtung empfangene Identifikationssignal zu verarbeiten, um eine Korrelation zwischen den Daten, die die Bewegung des ersten Objekts (2) anzeigen, wie vom Bewegungssensor erkannt und im Identifikationssignal übertragen, und den Daten, die die Bewegung eines oder mehrerer weiterer Objekte (2) anzeigen, zu bestimmen, und um basierend auf der Korrelation der Daten, die die Bewegung der Objekte (2) anzeigen, einen Hinweis auf assoziierte Objekte (2) zu erzeugen.

2. Vorrichtung nach Anspruch 1, wobei der Bewegungssensor und der Generator des Identifikationssignals ein Slave-Gerät (4) umfassen, wobei das Slave-Gerät (4) des Weiteren eine assoziierte Empfangsvorrichtung umfasst, wobei die Vorrichtung des Weiteren ein Master-Gerät (6) zur Abfrage des Slave-Geräts (4) umfasst, wobei das Master-Gerät (6) die erste Empfangsvorrichtung und eine weitere Sendevorrichtung umfasst, die dazu eingerichtet ist, ein Abfragesignal an das Slave-Gerät (4) zu übertragen, um zu veranlassen, dass sich das Slave-Gerät (4) gegenüber dem Master-Gerät (6) identifiziert.

3. Vorrichtung nach einem der vorstehenden Ansprüche, wobei der Generator des Identifikationssignals dazu eingerichtet ist, ein erstes Identifikationssignal, das die Identität des Geräts umfasst, und ein zweites Identifikationssignal, das Bewegungsdaten des Objekts (2) umfasst, zu erzeugen.

4. Vorrichtung nach einem der Ansprüche 2 und 3, des Weiteren umfassend eine Mehrzahl von Slave-Geräten (4), wobei jedes Slave-Gerät (4) mit einem entsprechenden Objekt (2) assoziiert ist.

5. Vorrichtung nach einem der Ansprüche 2 bis 4, des Weiteren umfassend ein Slave-Steuerungsgerät, um ein oder mehrere der Slave-Geräte (4) davon abzuhalten, die Abfrage des Master-Geräts (6) zu beantworten, nachdem das Slave-Gerät (4) identifiziert wurde und die mit dem Slave-Gerät assoziierten Bewegungsdaten gelesen wurden.

6. Vorrichtung nach einem der Ansprüche 2 bis 5, des Weiteren umfassend ein Mittel, das verhindert, dass ein oder mehrere Slave-Geräte (4) in dem Fall auf die Abfrage antworten, in dem seit der letzten Abfrage des Slave-Geräts (4) keine Änderung der Bewegungsdaten vorliegt.

7. Vorrichtung nach einem der Ansprüche 2 bis 6, wobei ein oder mehrere Slave-Geräte (4) eine Einheit umfassen, die an einem Objekt (2) befestigt werden kann, und wobei das Master-Gerät (6) eine Einheit umfasst, die an einem weiteren Objekt (2) befestigt werden kann.

8. Vorrichtung nach einem der vorstehenden Ansprüche, wobei der Bewegungssensor ein dreidimensionaler Bewegungssensor ist.

9. Vorrichtung nach einem der vorstehenden Ansprüche, wobei das Identifikationssignal ein RF-Signal ist.

10. Verfahren zur Identifizierung und Bereitstellung eines Hinweises auf assoziierte Objekte (2), wobei das Verfahren umfasst:
Erkennen der Bewegung eines ersten Objekts (2) unter Verwendung eines Bewegungssensors
Erzeugen eines Identifikationssignals zur Identifizierung des ersten Objekts (2), wobei das Identifikationssignal Daten, die die Identität des ersten Objekts (2) anzeigen, und Daten, die die Bewegung des ersten vom Bewegungssensor erkannten Objekts (2) anzeigen, umfasst;
Übertragen des Identifikationssignals an eine Empfangsvorrichtung; und
Verarbeiten des übertragenen und von der Empfangsvorrichtung empfangenen Identifikationssignals, um eine Korrelation zwischen den Daten, die die Bewegung des ersten Objekts (2) anzeigen, wie vom Bewegungssensor erkannt und im Identifikationssignal übertragen, und den Daten, die die Bewegung eines oder mehrerer weiterer Objekte (2) anzeigen, zu bestimmen, und um basierend auf der Korrelation der Daten, die die Bewegung der Objekte (2) anzeigen, einen Hinweis auf assoziierte Objekte (2) zu erzeugen.

11. Verfahren nach Anspruch 10, wobei der Bewegungssensor und der Generator des Identifikationssignals ein Slave-Gerät (4) umfassen, wobei das Slave-Gerät (4) des Weiteren eine assoziierte Empfangsvorrichtung umfasst, wobei das Verfahren des Weiteren die Abfrage des Slave-Geräts (4), unter Verwendung eines Master-Geräts (6), und die Übertragung eines Abfragesignals vom Master-Gerät (6) an das Slave-Gerät (4) umfasst, um zu veranlassen, dass sich das Slave-Gerät (4) gegenüber dem Master-Gerät (6) identifiziert.

12. Verfahren nach einem der Ansprüche 10 und 11, wobei der Schritt des Erzeugens eines Identifikationssignals das Erzeugen eines ersten Identifikationssignals, das die Identität des Geräts umfasst, und das Erzeugen eines zweiten Identifikationssignals umfasst, das Bewegungsdaten des Objekts (2) umfasst.

13. Verfahren nach einem der Ansprüche 10 bis 12, umfassend das Erkennen der Bewegung einer Mehrzahl von Objekten (2), die jeweils ein assoziiertes Slave-Gerät (4) aufweisen.

14. Verfahren nach einem der Ansprüche 11 bis 13, des Weiteren umfassend das Verhindern, dass ein oder mehrere Slave-Geräte (4) auf eine Abfrage des Master-Geräts (6) antworten, nachdem das Slave-Gerät (4) identifiziert wurde und die mit dem Slave-Gerät (4) assoziierten Bewegungsdaten gelesen wurden.

15. Verfahren nach einem der Ansprüche 11 bis 14, des Weiteren umfassend das Verhindern, dass ein oder mehrere der Slave-Geräte (4) in dem Fall auf die Abfrage antworten, in dem seit der letzten Abfrage des Slave-Geräts (4) keine Änderung der Bewegungsdaten vorliegt.

16. Verfahren nach einem der Ansprüche 11 bis 15, des Weiteren umfassend das Befestigen eines oder mehrerer der Slave-Geräte (4) als Einheit an dem oder den betreffenden Objekten (2) und das Befestigen des Master-Geräts (6) als Einheit an einem weiteren Objekt (2).

17. Verfahren nach einem der Ansprüche 10 bis 16, wobei der Schritt der Bewegungserkennung das Erkennen der Bewegung unter Verwendung eines dreidimensionalen Bewegungssensors umfasst.

18. Verfahren nach einem der Ansprüche 10 bis 17, wobei der Schritt des Erzeugens eines Identifikationssignals das Erzeugen eines RF-Signals umfasst.

## Revendications

1. Appareil pour identifier et fournir une indication d'objets associés (2), l'appareil comprenant :
un capteur de mouvement destiné à détecter le mouvement d'un premier objet (2) ;
un générateur de signal d'identification agencé de manière à générer un signal d'identification pour identifier un premier objet (2), le signal d'identification comprenant des données indicatives de l'identité du premier objet (2) et des données indicatives du mouvement du premier objet (2) détecté par le capteur de mouvement ;
un émetteur agencé de manière à transmettre le signal d'identification ;
un premier récepteur agencé de manière à recevoir le signal d'identification transmis ; et
un processeur agencé de manière à traiter le signal d'identification transmis reçu par le récepteur, en vue de déterminer une corrélation des données indicatives du mouvement du premier objet (2), tel que détecté par le capteur de mouvement et transmis dans le signal d'identification, avec des données indicatives du mouvement d'un ou plusieurs objets supplémentaires (2), et à générer une indication d'objets associés (2) sur la base de la corrélation des données indicatives du mouvement des objets (2).

2. Appareil selon la revendication 1, dans lequel le capteur de mouvement et le générateur de signal d'identification comportent un dispositif esclave (4), le dispositif esclave (4) comprenant en outre un récepteur associé, l'appareil comprenant en outre un dispositif maître (6) destiné à interroger le dispositif esclave (4), le dispositif maître (6) comprenant le premier récepteur et un émetteur supplémentaire agencé de manière à transmettre un signal d'interrogation au dispositif esclave (4) en vue d'amener le dispositif esclave (4) à s'identifier auprès du dispositif maître (6).

3. Appareil selon l'une quelconque des revendications précédentes, dans lequel le générateur de signal d'identification est agencé de manière à générer un premier signal d'identification comprenant l'identité de dispositif et un second signal d'identification comprenant des données de mouvement de l'objet (2).

4. Appareil selon l'une quelconque des revendications 2 et 3, comprenant en outre une pluralité de dispositifs esclaves (4), chaque dispositif esclave (4) étant associé à un objet respectif (2).

5. Appareil selon l'une quelconque des revendications 2 à 4, comprenant en outre un dispositif de commande esclave destiné à empêcher qu'un ou plusieurs desdits dispositifs esclaves (4) ne répondent à une interrogation effectuée par le dispositif maître (6) après que le dispositif esclave (4) a été identifié et que des données de mouvement associées à ce dispositif esclave ont été lues.

6. Appareil selon l'une quelconque des revendications 2 à 5, comprenant en outre un moyen pour empêcher qu'un ou plusieurs desdits dispositifs esclaves (4) ne répondent à une interrogation, dans le cas où il n'existe pas de changement dans des données de mouvement depuis la dernière interrogation dudit dispositif esclave (4).

7. Appareil selon l'une quelconque des revendications 2 à 6, dans lequel un ou plusieurs desdits dispositifs esclaves (4) comportent une unité pouvant être fixée à un objet (2), et le dispositif maître (6) comprend une unité pouvant être fixée à un objet supplémentaire (2).

8. Appareil selon l'une quelconque des revendications précédentes, dans lequel le capteur de mouvement est un capteur de mouvement tridimensionnel.

9. Appareil selon l'une quelconque des revendications précédentes, dans lequel le signal d'identification est un signal RF.

10. Procédé d'identification et de fourniture d'une indication d'objets associés (2), le procédé comprenant les étapes ci-dessous consistant à :
détecter le mouvement d'un premier objet (2) en utilisant un capteur de mouvement ;
générer un signal d'identification pour identifier un premier objet (2), le signal d'identification comprenant des données indicatives de l'identité du premier objet (2) et des données indicatives du mouvement du premier objet (2) détecté par le capteur de mouvement ;
transmettre le signal d'identification à un récepteur ; et
traiter le signal d'identification transmis reçu par le récepteur, en vue de déterminer une corrélation des données indicatives du mouvement du premier objet (2), tel que détecté par le capteur de mouvement et transmis dans le signal d'identification, avec des données indicatives du mouvement d'un ou plusieurs objets supplémentaires (2), et générer une indication d'objets associés (2) sur la base de la corrélation des données indicatives du mouvement des objets (2).

11. Procédé selon la revendication 10, dans lequel le capteur de mouvement et le générateur de signal d'identification comportent un dispositif esclave (4), le dispositif esclave (4) comprenant en outre un récepteur associé, le procédé comprenant en outre l'étape consistant à interroger le dispositif esclave (4) en utilisant un dispositif maître (6), et à transmettre, à partir du dispositif maître (6), un signal d'interrogation, au dispositif esclave (4), en vue d'amener le dispositif esclave (4) à s'identifier auprès du dispositif maître (6).

12. Procédé selon l'une quelconque des revendications 10 et 11, dans lequel l'étape de génération d'un signal d'identification consiste à générer un premier signal d'identification comprenant l'identité de dispositif, et à générer un second signal d'identification comprenant des données de mouvement de l'objet (2).

13. Procédé selon l'une quelconque des revendications 10 à 12, comprenant l'étape consistant à détecter le mouvement d'une pluralité d'objets (2) présentant chacun un dispositif esclave associé (4).

14. Procédé selon l'une quelconque des revendications 11 à 13, comprenant en outre l'étape consistant à empêcher qu'un ou plusieurs desdits dispositifs esclaves (4) ne répondent à une interrogation effectuée par le dispositif maître (6) après que le dispositif esclave (4) a été identifié et que des données de mouvement associées à ce dispositif esclave (4) ont été lues.

15. Procédé selon l'une quelconque des revendications 11 à 14, comprenant en outre l'étape consistant à empêcher qu'un ou plusieurs desdits dispositifs esclaves (4) ne répondent à une interrogation, dans le cas où il n'existe pas de changement dans des données de mouvement depuis la dernière interrogation dudit dispositif esclave (4).

16. Procédé selon l'une quelconque des revendications 11 à 15, comprenant en outre l'étape consistant à fixer ledit un ou lesdits plusieurs desdits dispositifs esclaves (4), en tant qu'unité, à un ou plusieurs objets respectifs (2), et à fixer le dispositif maître (6), en tant qu'unité, à un objet supplémentaire (2).

17. Procédé selon l'une quelconque des revendications 10 à 16, dans lequel l'étape de détection du mouvement consiste à détecter le mouvement en utilisant un capteur de mouvement tridimensionnel.

18. Procédé selon l'une quelconque des revendications 10 à 17, dans lequel l'étape de génération d'un signal d'identification consiste à générer un signal RF.
